# EUROPEAN PATENT APPLICATION

(11) **EP 4 403 051 A1**
(43) Date of publication of application: **24.07.2024**
(21) Application number: 22869028.5
(22) Date of filing: 30.08.2022
(51) Int. Cl.: A24F 40/40, A24F 40/46, A24F 40/50, A24F 40/90

(54) **AEROSOL GENERATION APPARATUS AND SPLIT-TYPE AEROSOL GENERATION APPARATUS THEREOF**

(30) Priority: 14.09.2021 CN 202111076115
(71) Applicant: Shenzhen Merit Technology Co., Ltd., Shenzhen, Guangdong 518105 (CN)
(72) Inventor: YANG, Hui, Shenzhen, Guangdong 518105 (CN); ZHANG, Xingfu, Shenzhen, Guangdong 518105 (CN); LIN, Qiaoshi, Shenzhen, Guangdong 518105 (CN)
(74) Representative: Herrero & Asociados, S.L.
(86) International application number: PCT/CN2022/115911
(87) International publication number: WO 2023/040656

(57) **Abstract**

Disclosed in the present application are an aerosol generation apparatus and a split-type aerosol generation apparatus. The aerosol generation apparatus comprises: a heating element, which is used for baking an aerosol matrix at a low temperature, so as to generate aerosol; a hybrid capacitor, which is used for supplying power to the heating element; and a control circuit, wherein one end of the control circuit is connected to the heating element, and the other end of the control circuit is connected to the hybrid capacitor, and the control circuit is used for controlling the starting and stopping of power supply to the heating element. By means of the present application, a hybrid capacitor is used as a power source of an aerosol generation apparatus, such that the hybrid capacitor receives a large current, and the aerosol generation apparatus can thus be quickly charged, thereby shortening the charging time, and improving the charging efficiency.

## Description

### TECHNICAL FIELD

The present disclosure relates to the field of electronic atomization devices, and in particular to an aerosol generating device and a split-type aerosol generating device.

### BACKGROUND

As an emerging technology, an electronic atomization device replaces a traditional burning-type cigarette by heating e-liquid or low-temperature baking cigarette. An operating temperature of the electronic atomization device is low, and harmful components in the smoke generated by the electronic atomization device are far less than those of the traditional burning-type cigarette. The use of the electronic atomization device may greatly avoid the adverse effects of cigarettes on the human body, so that smoking by using the electronic atomization device becomes a healthier way of smoking.

At present, aerosol generating devices on the market are mainly divided into two types, one type is the electronic atomization device that heats a liquid aerosol generating matrix, and the other type is the electronic atomization device that heats a solid aerosol generating matrix at a low temperature but does not burn the solid aerosol generating matrix.

At present, a power source used in the portable low-temperature baking integrated appliance system for generating aerosols is a lithium-ion battery, which has problems such as low safety, short service life, and long charging time.

### SUMMARY OF THE DISCLOSURE

The present disclosure at least provides an aerosol generating device and a split-type aerosol generating device.

A first aspect of the present disclosure provides an aerosol generating device. The aerosol generating device includes a heater, a hybrid capacitor, and a control circuit.

The heater is configured to heat an aerosol forming substrate to generate aerosol.

The hybrid capacitor is configured to supply power to the heater.

One end of the control circuit is connected to the heater, the other end of the control circuit is connected to the hybrid capacitor, and the control circuit is configured to control the supply of power to the heater.

In some embodiments, the aerosol generating device further includes a first capacitor connected in parallel with the control circuit. The control circuit is configured to control the hybrid capacitor to supply power to the first capacitor, and is configured to control the first capacitor to supply power to the heater.

In some embodiments, the aerosol generating device includes a plurality of first capacitors, and the plurality of first capacitors are disposed in parallel or in series.

In some embodiments, the control circuit includes a first switching element, a second switching element, and a controller.

The first switching element is connected between the hybrid capacitor and the first capacitor.

The second switching element is connected between the first capacitor and the heater.

The controller is respectively connected to the first switching element and the second switching element, and the controller is configured for controlling the first switching element and the second switching element to turn on or off.

In some embodiments, the controller is configured to control the first switching element to turn on and control the second switching element to turn off, and the hybrid capacitor is configured to supply power to the first capacitor.

The controller is configured to control the first switching element to turn off and control the second switching element to turn on, and the first capacitor is configured to supply power to the heater.

In some embodiments, the aerosol generating device further includes a housing and a charging interface.

The housing defines an accommodation space configured for accommodating the aerosol forming substrate and the heater.

The charging interface is configured to connect the control circuit to an external power supply, and the external power supply is configured to supply power to the hybrid capacitor through the control circuit.

In some embodiments, the accommodation space and the hybrid capacitor are respectively disposed on two ends of the aerosol generating device, and the charging interface is disposed on a side wall of the housing.

In some embodiments, the aerosol generating device includes a plurality of heaters, and the plurality of heaters are disposed in parallel or in series.

In some embodiments, the aerosol generating device includes a plurality of hybrid capacitors, and the plurality of hybrid capacitors are disposed in parallel or in series.

A second aspect of the present disclosure provides a split-type aerosol generating device. The split-type aerosol generating device includes a charging device and any of the above-mentioned aerosol generating devices. The charging device is connected to the aerosol generating device and configured for charging the aerosol generating device.

In some embodiments, the charging device is a current source power supply device.

The effects of the present disclosure are as follows. Different from the related art, in the present disclosure, the hybrid capacitor is used as the power supply of the aerosol generating device, so that the hybrid capacitor receives a large current. Thus, the aerosol generating device may be quickly charged, thereby shortening the charging time and improving the charging efficiency.

It should be understood that the foregoing general description and the following detailed description are exemplary and explanatory only, and do not limit the present disclosure.

### BRIEF DESCRIPTION OF THE DRAWINGS

In order to more clearly illustrate the technical solutions in some embodiments of the present disclosure, hereinafter, a brief introduction will be given to the accompanying drawings that are used in the description of some embodiments. Obviously, the accompanying drawings in the description below are merely some embodiments of the present disclosure. For those of ordinary skill in the art, other accompanying drawings may be obtained based on these accompanying drawings without any creative efforts.
FIG. 1 is a structural schematic view of an aerosol generating device in an embodiment of the present disclosure.
FIG. 2 is a structural schematic view of an aerosol generating device in another embodiment of the present disclosure.
FIG. 3 is a structural schematic view of a control circuit of FIG. 2 in an embodiment of the present disclosure.
FIG. 4 is a structural schematic view of a split-type aerosol generating device in an embodiment of the present disclosure.
FIG. 5 is a structural schematic view of a charging device of FIG. 4 in an embodiment of the present disclosure.

### DETAILED DESCRIPTION

In order for those skilled in the art to better understand the technical solutions of the present disclosure, the aerosol generating device and the split-type aerosol generating device provided in the present disclosure may be further described in detail below with reference to the accompanying drawings and embodiments. It should be understood that the described embodiments are only a part of the embodiments of the present disclosure, and not all embodiments. Based on the embodiments in the present disclosure, all other embodiments obtained by those of ordinary skill in the art without creative effort are within the scope of the present disclosure.

The terms "first", "second", etc. in the present disclosure are configured to distinguish different objects, not to describe a specific order. In addition, the terms "include", "comprise", and "have", as well as any variations thereof, are intended to cover non-exclusive inclusions. For example, a process, a method, a system, a product, or a device that includes a series of operations or units is not limited to the listed operations or units, but optionally includes operations or units that are not listed, or optionally includes other operations or units that are inherent to these processes, methods, products, or devices.

As an emerging technology, an electronic atomization device replaces a traditional burning-type cigarette by heating e-liquid or low-temperature baking cigarette. An operating temperature of the electronic atomization device is low, and harmful components in the smoke generated by the electronic atomization device are far less than those of the traditional burning-type cigarette. The use of the electronic atomization device may greatly avoid the adverse effects of cigarettes on the human body, so that smoking by using the electronic atomization device becomes a healthier way of smoking.

At present, the electronic atomization devices on the market are mainly divided into two types. One type is the electronic atomization smoking set that may form an inhalable smoke by evaporating e-liquid, and the other type is the aerosol generating device that heats a tobacco aerosol generating matrix at a low temperature but does not burning the tobacco aerosol generating matrix to form the inhalable smoke.

For the aerosol generating device, generally, a heater such as a heating plate is inserted into the aerosol generating matrix to heat the aerosol generating matrix. By controlling a heating temperature, the components in the aerosol generating matrix volatilize to generate smoke for human inhalation. A power source used in the portable low-temperature baking integrated appliance system for generating aerosols in related art is a lithium-ion battery, which has problems such as low safety, short service life, and long charging time.

The present disclosure provides an aerosol generating device to solve the problems that the power source used in the portable low-temperature baking integrated appliance system for generating aerosols has low safety, short service life, and long charging time.

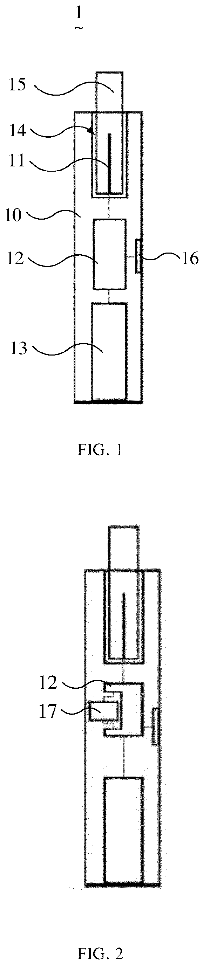

As illustrated in FIG. 1, FIG. 1 is a structural schematic view of an aerosol generating device in an embodiment of the present disclosure. As illustrated in FIG. 1, the aerosol generating device 1 includes a housing 10, a heater 11, a control circuit 12, and a hybrid capacitor 13. The heater 11, the control circuit 12, and the hybrid capacitor 13 are disposed in the housing 10.

The housing 10 defines an accommodation space 14, and the accommodation space 14 is configured for accommodating an aerosol forming substrate 15 and the heater 11. In the present embodiment, the housing 10 is a cuboid, the accommodation space 14 and the hybrid capacitor 13 are respectively disposed on two ends of the aerosol generating device 1. The control circuit 12 is disposed between the accommodation space 14 and the hybrid capacitor 13, to connect the heater 11 and the hybrid capacitor 13.

In some embodiments, the housing 10 may be a cylinder or other shapes. In some embodiments, the accommodation space 14 and the hybrid capacitor 13 may be disposed on the same side of the housing 10, and the control circuit 12 may be disposed on the other side of the housing 10. Alternatively, the accommodation space 14 and the control circuit 12 are disposed on one side of the housing 10, and the hybrid capacitor 13 is disposed on the other side of the housing 10.

The heater 11 is configured for baking the aerosol forming substrate 15 at a low temperature to generate aerosol. In the present embodiment, the aerosol generating device 1 may include one heater 11, one end of the heater 11 is disposed close to the aerosol forming substrate 15, to heat the aerosol forming substrate 15 at the low temperature, and the other end of the heater 11 is connected to the control circuit 12.

In some embodiments, the aerosol generating device 1 may include a plurality of heaters 11, and the plurality of heaters 11 are connected in series or in parallel.

In some embodiments, in response to the plurality of heaters 11 being disposed in series, one end of each of the plurality of heaters 11 is disposed close to the aerosol forming substrate 15, and the other end of each of the heater 11 is sequentially connected to the other end of an adjacent heater 11, and the other end of the last heater 11 is connected to the control circuit 12. In response to the plurality of heaters 11 being disposed in parallel, one end of each heater 11 is disposed close to the aerosol forming substrate 15, and the other end of each heater 11 is connected to the control circuit 12.

In the present embodiment, the hybrid capacitor 13 is different from an ordinary capacitor or a lithium battery. The hybrid capacitor 13 has the advantages of large charge and discharge current and long service life. The aerosol generating device 1 uses the hybrid capacitor 13 as a power source, which may be charged with a super large current, reduce charging time, and improve the security of the power supply and the power cycle service life.

In the present embodiment, the aerosol generating device 1 includes one hybrid capacitor 13, and one end of the hybrid capacitor 13 is connected to the control circuit 12.

In some embodiments, the aerosol generating device 1 includes a plurality of hybrid capacitors 13, and the plurality of hybrid capacitors 13 are connected in series or in parallel.

In some embodiments, in response to the plurality of hybrid capacitors 13 being disposed in series, one end of each hybrid capacitor 13 is sequentially connected to one end of an adjacent hybrid capacitor 13, and the other end of the last hybrid capacitor 13 is connected to the control circuit 12. In response to the plurality of hybrid capacitors 13 being disposed in parallel, one end of each hybrid capacitor 13 is connected to the control circuit 12.

One end of the control circuit 12 is connected to the heater 11, and the other end of the control circuit 12 is connected to the hybrid capacitor 13. The control circuit 12 controls the supply of power to the heater 11 by controlling the charging and discharging of the hybrid capacitor 13.

As illustrated in FIG. 1, the aerosol generating device 1 further includes a charging interface 16, and the charging interface 16 is configured for connecting the control circuit 12 to an external power supply, so that the external power supply supplies power to the hybrid capacitor 13 through the control circuit 12.

In some embodiments, the charging interface 16 is disposed on a side wall of the housing 10, and then is disposed on a side wall of the aerosol generating device 1, so that the external power source may be connected to the charging interface 16 to realize connection with the control circuit 12.

As illustrated in FIG. 1 and FIG. 2, FIG. 2 is a structural schematic view of an aerosol generating device in another embodiment of the present disclosure. As illustrated in FIG. 2, the aerosol generating device 1 further includes a first capacitor 17.

The first capacitor 17 is connected in parallel with the control circuit 12. The control circuit 12 is configured to control the hybrid capacitor 13 to supply power to the first capacitor 17, and to control the first capacitor 17 to supply power to the heater 11.

In the present embodiment, the first capacitor 17 is an ordinary capacitor with a large capacity. In response to the hybrid capacitor 13 supplying power to the first capacitor 17, the first capacitor 17 may store more voltage. And then in response to the first capacitor 17 supplying power to the heater 11, the heater 11 may maintain a longer heating time and prolong a single use time of the aerosol generating device 1.

In the present embodiment, the aerosol generating device 1 includes one first capacitor 17. In some embodiments, the aerosol generating device 1 may include a plurality of first capacitors 17, and the plurality of first capacitors 17 are disposed in parallel or in series.

In some embodiments, in response to the plurality of first capacitors 17 being disposed in series, one end of each first capacitor 17 is sequentially connected to one end of an adjacent first capacitor 17, the other end of a first first capacitor 17 is connected to a first end of the control circuit 12, and the other end of the last first capacitor 17 is connected to a second end of the control circuit 12. In response to the first capacitors 17 being disposed in parallel, two ends of each first capacitor 17 are respectively connected to the first end and the second end of the control circuit 12.

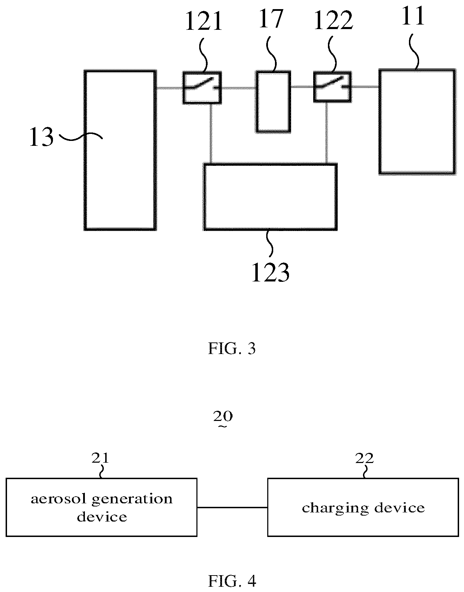

As illustrated in FIG. 2 and FIG. 3, FIG. 3 is a structural schematic view of a control circuit of FIG. 2 in an embodiment of the present disclosure. As illustrated in FIG. 3, the control circuit 12 includes a first switching element 121, a second switching element 122, and a controller 123.

The first switching element 121 is connected between the hybrid capacitor 13 and the first capacitor 17. The second switching element 122 is connected between the first capacitor 17 and the heater 11. The controller 123 is respectively connected to the first switching element 121 and the second switching element 122. The controller 123 is configured to control the first switching element 121 and the second switching element 122 to turn on or off, and then control the hybrid capacitor 13 or the first capacitor 17 to discharge.

In some embodiments, the controller 123 controls the first switching element 121 to turn on, and controls the second switching element 122 to turn off. In this case, the external power supply is configured for charging, and the fully charged hybrid capacitor 13 supplies power to the first capacitor 17.

The controller 123 controls the first switching element 121 to turn off, and controls the second switching element 122 to turn on. In this time, the hybrid capacitor 13 is configured for charging, and the fully charged first capacitor 17 supplies power to the heater 11.

In response to the heater 11 finishing baking at the low temperature, the controller 123 controls the first switching element 121 to turn off, and controls the second switching element 122 to turn off.

In response to the aerosol generating device 1 being charged by the external power supply, operations are as follows.

(1) The controller 123 determines an initial parameter value of at least one hybrid capacitor 13.

(2) The external power supply charges the at least one hybrid capacitor 13 through the control circuit 12, that is, the aerosol generating device 1 is charged.

(3) The controller 123 determines that a parameter value of the at least one hybrid capacitor 13 reaches a preset value, and the external power supply stops charging.

The initial parameter value includes any one of an initial voltage, an initial charge quantity, an initial capacity, and initial energy. The parameter value includes any one of a charge quantity, a capacity, a charging time, and energy. The unit of the initial voltage is volt (V). The unit of the initial charge quantity is the same as that of the charge quantity, which is coulomb (C). The unit of the initial capacity is the same as that of the capacity, which is milliampere/hour (mA/h). The unit of the initial energy is the same as that of the energy, which is watt/hour (W/h). The unit of charging time is watt/hour (W/h).

In some embodiments, after the controller 123 determines a total initial voltage of the at least one hybrid capacitor 13, the external power supply charges the at least one hybrid capacitor 13 through the control circuit 12 until a total charge quantity of the at least one hybrid capacitor 13 reaches a preset value, and the external power supply stops charging.

After the controller 123 determines the total initial voltage of the at least one hybrid capacitor 13, the external power supply charges the at least one hybrid capacitor 13 through the control circuit 12 until a total capacity of the at least one hybrid capacitor 13 reaches the preset value, and the external power supply stops charging.

After the controller 123 determines total initial energy of the at least one hybrid capacitor 13, the external power supply charges the at least one hybrid capacitor 13 through the control circuit 12 until a total charging time of the at least one hybrid capacitor 13 reaches the preset value, and the external power supply stops charging.

After the controller 123 determines the total initial energy of the at least one hybrid capacitor 13, the external power supply charges the at least one hybrid capacitor 13 through the control circuit 12 until total energy of the at least one hybrid capacitor 13 reaches the preset value, and the external power supply stops charging.

After the controller 123 determines the total initial energy of the at least one hybrid capacitor 13, the external power supply charges the at least one hybrid capacitor 13 through the control circuit 12 until the total charge quantity of the at least one hybrid capacitor 13 reaches the preset value, and the external power supply stops charging.

After the controller 123 determines the total initial energy of the at least one hybrid capacitor 13, the external power supply charges the at least one hybrid capacitor 13 through the control circuit 12 until the total capacity of the at least one hybrid capacitor 13 reaches the preset value, and the external power supply stops charging.

After the controller 123 determines the total initial charge quantity of the at least one hybrid capacitor 13, the external power supply charges the at least one hybrid capacitor 13 through the control circuit 12 until the total charging time of the at least one hybrid capacitor 13 reaches the preset value, and the external power supply stops charging.

After the controller 123 determines the total initial charge quantity of the at least one hybrid capacitor 13, the external power supply charges the at least one hybrid capacitor 13 through the control circuit 12 until the total energy of the at least one hybrid capacitor 13 reaches the preset value, and the external power supply stops charging.

After the controller 123 determines the total initial charge quantity of the at least one hybrid capacitor 13, the external power supply charges the at least one hybrid capacitor 13 through the control circuit 12 until the total charge quantity of the at least one hybrid capacitor 13 reaches the preset value, and the external power supply stops charging.

After the controller 123 determines the total initial charge quantity of the at least one hybrid capacitor 13, the external power supply charges the at least one hybrid capacitor 13 through the control circuit 12 until the total capacity of the at least one hybrid capacitor 13 reaches the preset value, and the external power supply stops charging.

After the controller 123 determines the total initial capacity of the at least one hybrid capacitor 13, the external power supply charges the at least one hybrid capacitor 13 through the control circuit 12 until the total charging time of the at least one hybrid capacitor 13 reaches the preset value, and the external power supply stops charging.

After the controller 123 determines the total initial capacity of the at least one hybrid capacitor 13, the external power supply charges the at least one hybrid capacitor 13 through the control circuit 12 until the total energy of the at least one hybrid capacitor 13 reaches the preset value, and the external power supply stops charging.

After the controller 123 determines the total initial capacity of the at least one hybrid capacitor 13, the external power supply charges the at least one hybrid capacitor 13 through the control circuit 12 until the total charge quantity of the at least one hybrid capacitor 13 reaches the preset value, and the external power supply stops charging.

After the controller 123 determines the total initial capacity of the at least one hybrid capacitor 13, the external power supply charges the at least one hybrid capacitor 13 through the control circuit 12 until the total capacity of the at least one hybrid capacitor 13 reaches the preset value, and the external power supply stops charging.

In the present disclosure, the hybrid capacitor 13 is used as the power source of the aerosol generating device 1, so that the hybrid capacitor 13 receives the super large current. Thus, the aerosol generating device 1 may be quickly charged, thereby shortening the charging time and improving the charging efficiency. Moreover, the hybrid capacitor 13 may effectively improve the safety of the power supply of the aerosol generating device 1 and the cycle service life of the power supply.

Furthermore, in the present disclosure, a large-capacity ordinary capacitor is used as the first capacitor 17, and the first capacitor 17 is disposed in parallel with the control circuit 12, so that the heater 11 may maintain the longer heating time and prolong the single use time of the aerosol generating device 1.

The present disclosure further provides a split-type aerosol generating device, as illustrated in FIG. 4, FIG. 4 is a structural schematic view of a split-type aerosol generating device in an embodiment of the present disclosure. As illustrated in FIG. 4, the split-type aerosol generating device 20 includes an aerosol generating device 21 and a charging device 22. The aerosol generating device 21 is the aerosol generating device 1 disclosed in any of the above-mentioned embodiments, which may not be repeated here.

The charging device 22 is connected to the aerosol generating device 21, and is configured for charging the hybrid capacitor 13 of the aerosol generating device 21. In the present embodiment, the charging device 22 is a current source power supply device.

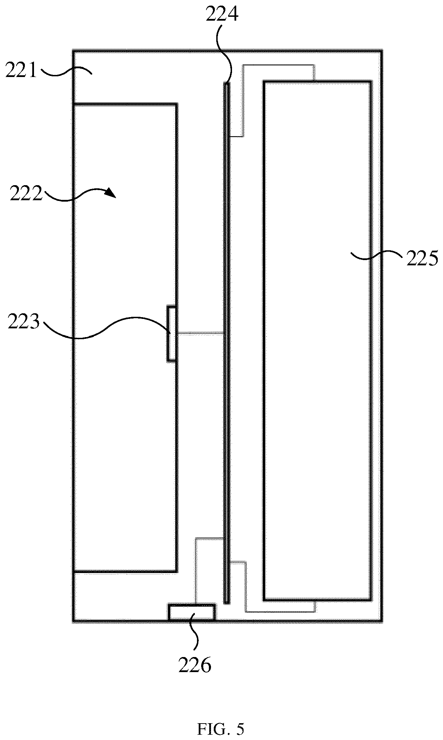

As illustrated in FIG. 4 and FIG. 5, FIG. 5 is a structural schematic view of a charging device of FIG. 4 in an embodiment of the present disclosure. As illustrated in FIG. 5, the charging device 22 includes a current source housing 221, a charging compartment 222, a discharging interface 223, a second control circuit 224, and a charging element 225.

One end of the current source housing 221 defines the charging compartment 222, and the discharging interface 223 is disposed in the charging compartment 222. The second control circuit 224 and the charging element 225 are disposed in the current source housing 221.

The charging compartment 222 is configured for accommodating the aerosol generating device 21. The charging compartment 222 defines an opening (not shown in the figures), so that the aerosol generating device 21 is disposed in the charging compartment 222 through the opening.

The discharging interface 223 is disposed on a side wall of the charging compartment 222 away from the opening. The discharging interface 223 is connected to the charging interface 16, so that the aerosol generating device 21 is connected to the charging device 22.

The charging element 225 is configured to provide a charging voltage and supply power to the hybrid capacitor 13. In the present embodiment, the charging element 225 may be the hybrid capacitor or a rechargeable battery. In some embodiments, the rechargeable battery may be a lithium battery.

The second control circuit 224 is connected to the charging element 225 and the discharging interface 223, to control the charging element 225 to release the charging voltage to the hybrid capacitor 13 through the discharging interface 223.

The above description are only some embodiments of the present disclosure, and are not intended to limit the scope of the present disclosure. Any equivalent structure or equivalent flow transformation made by using the contents of the specification and accompanying drawings of the present disclosure, or directly or indirectly applied to other related technical fields, is included in the scope of the patent protection of the present disclosure.

## Claims

1. An aerosol generating device, **characterized by** comprising:
a heater, configured to heat an aerosol forming substrate to generate aerosol;
a hybrid capacitor, configured to supply power to the heater; and
a control circuit, wherein one end of the control circuit is connected to the heater, the other end of the control circuit is connected to the hybrid capacitor, and the control circuit is configured to control the supply of power to the heater.

2. The aerosol generating device according to claim 1, wherein the aerosol generating device further comprises a first capacitor connected in parallel with the control circuit, the control circuit is configured to control the hybrid capacitor to supply power to the first capacitor, and is configured to control the first capacitor to supply power to the heater.

3. The aerosol generating device according to claim 2, wherein the aerosol generating device comprises a plurality of first capacitors, and the plurality of first capacitors are disposed in parallel or in series.

4. The aerosol generating device according to claim 2, wherein the control circuit comprises:
a first switching element, connected between the hybrid capacitor and the first capacitor;
a second switching element, connected between the first capacitor and the heater;
a controller, respectively connected to the first switching element and the second switching element, wherein the controller is configured for controlling the first switching element and the second switching element to turn on or off.

5. The aerosol generating device according to claim 4, wherein
the controller is configured to control the first switching element to turn on and control the second switching element to turn off, and the hybrid capacitor is configured to supply power to the first capacitor;
the controller is configured to control the first switching element to turn off and control the second switching element to turn on, and the first capacitor is configured to supply power to the heater.

6. The aerosol generating device according to claim 1, further comprising:
a housing, defining an accommodation space configured for accommodating the aerosol forming substrate and the heater; and
a charging interface, configured to connect the control circuit to an external power supply, wherein the external power supply is configured to supply power to the hybrid capacitor through the control circuit.

7. The aerosol generating device according to claim 6, wherein the accommodation space and the hybrid capacitor are respectively disposed on two ends of the aerosol generating device, and the charging interface is disposed on a side wall of the housing.

8. The aerosol generating device according to claim 1, wherein the aerosol generating device comprises a plurality of heaters, and the plurality of heaters are disposed in parallel or in series.

9. The aerosol generating device according to claim 1, wherein the aerosol generating device comprises a plurality of hybrid capacitors, and the plurality of hybrid capacitors are disposed in parallel or in series.

10. A split-type aerosol generating device, **characterized by** comprising:
the aerosol generating device according to any one of claims 1 to 9; and
a charging device, connected to the aerosol generating device and configured for charging the aerosol generating device.

11. The split-type aerosol generating device according to claim 10, wherein the charging device is a current source power supply device.
